# EUROPEAN PATENT SPECIFICATION

(11) **EP 2 642 454 B1**
(45) Date of publication and mention of the grant of the patent: **21.04.2021**
(21) Application number: 12002055.7
(22) Date of filing: 23.03.2012
(51) Int. Cl.: G07C 9/00

(54) **A method of enabling reconfiguration and a system comprising a slave device**
Verfahren zur Ermöglichung einer Neukonfiguration und System umfassend ein Slavegerät
Procédé d'activation de reconfiguration et système comprenant un dispositif esclave

(43) Date of publication of application: 25.09.2013
(73) Proprietor: VKR Holding A/S, 2970 Hørsholm (DK)
(72) Inventor: Nielsen, Martin Sandal, 6830 Nørre Nebel (DK)
(74) Representative: Patentgruppen A/S

(56) References cited:
- EP-A2- 1 548 655
- US-A- 5 781 143
- US-A- 5 864 297
- US-A1- 2005 116 835

## Description

### Field of the invention

The invention relates to a method of enabling a slave device to enter a discover mode, said slave device having been configured to be controllable by at least one remote controller at a previous configuration step, whereby said slave device has been paired with said at least one remote controller to be controllable by said at least one remote controller.

The invention further relates to a system comprising at least one slave device and at least one remote controller and at least one further remote controller.

### Background of the invention

Within the field of remote control systems, e.g. wireless remote control systems, wherein by means of one or more remote controllers or master units one or more slave devices can be remotely controlled, it is commonly known that measures have been taken to ensure that only the intended remote controller (or controllers) can be used to control the slave device or the slave devices. Such slave devices can be various controllable devices, which comprise a receiver for receiving the control signals, for example in connection with home automation systems and the like, and as it will be understood, such slave devices can comprise or be connected to various actuators or the like, e.g. for actuating venting equipment, windows, doors, locks, etc. as found for example in connection with home automation systems or the like.

The measures taken to ensure that a slave device can only be controlled by one or more intended remote controller may for example comprise that an initial configuration procedure is performed, where the one or usually more slave devices are in a virgin mode, meaning that they have not previously been in a configuration procedure and are susceptible to be paired with the one or more intended remote controller. Examples of such systems and methods are disclosed in EP 1340198 B1.

The slave devices may be entered in the virgin mode, when they as newly installed devices are connected to a power source, e.g. when a battery is inserted, whereafter they may be open for configuration for a predetermined period, for example in a period of 10 minutes, where the configuration procedure may take place, e.g. involving the remote controller transmitting an initiation command, which, when received by slave devices in a virgin mode, prompts these to transmit a response containing their respective addresses to the remote controller, which subsequently transmits a secret code to the respective slave devices, said secret code being a unique code specific for the remote controller, which secret code afterwards is used for secure communication between the remote controller and the slave devices as disclosed in the above-mentioned EP 1340198 B1. The slave devices, which have now received and stored the code specific for the remote controller can now be remotely controlled only by the remote controller in question and not by any other remote controller, unless such other remote controller(s) has(have) been provided with the same specific code.

As further explained in the above-mentioned EP 1340198 B1, there may be cases where it must be possible to enter a new code, for example when using slave devices, which have been used already in a remote control system, in connection with a new or other system group, e.g. to allow the slave device to be reconfigurated. In EP 1340198 B1 it is explained that by carrying out a special procedure, it will be possible to reset or erase storage means in the slave device, which comprises the code, e.g. by activating an operation button, which is not ordinarily accessible. An example of this is explained in this document as being by removal of a top cover, under which the operation button is located, or another action requiring intervention with the system or by the operation button being manipulated in a certain manner.

As it will be understood, such a manipulation of an operation button in order to erase an already stored code, when it is desired to allow the slave device to store a new code from another remote controller, is only possible in practice, when the slave device is readily accessible. For instance, when the slave device is an actuator connected to a roof window, for example placed under the ceiling or on the roof, it may be highly impractical to gain access to such an actuator in order to manipulate such an operation button, and when it is desired to reconfigurate a number of such slave devices, in may in reality prove to be an overwhelming if not impossible task to gain access to all of the slave devices in the required manner and - if a time constraint is involved as well - within the prescribed time limit.

Further examples of slave devices are described in the prior art, which slave devices are configured with a specific button, which may be referred to as a pairing button, and which when manipulated allows the slave device to be paired with a remote controller, meaning that the slave device afterwards is paired with the remote controller to be controlled by this.

Thus, it will be understood that in general a slave device is susceptible to configuration, also referred to in the field as being in a virgin state, when the slave device as a new device is connected to a power source, e.g. a battery, whereafter it for a period of time, e.g. for example 10 minutes, can react to a discover request from a remote controller or master, respond by its address etc. and receive and store a secret code, which serves as a system key in order for the slave device to be paired with the remote controller.

Further, as described above, a slave device already paired with a remote controller can be re-entered into a virgin state in case it is equipped with a pairing button, which can be manipulated to allow the slave device to be re-configurated, e.g. reconfigurated to be controlled/paired with another remote controller.

US 5 864 297 A relates to a remote keyless entry system including a remote key fob or transmitting unit for communicating with a receiver mounted in a secure location in a vehicle for e.g. unlocking the doors. The receiver may be reprogrammed by the customer to accept signals from a different transmitter in the event that the key fob is lost or stolen. In order to do this, the system is put into a programming mode by using a transmitter whose security code is already stored in the receiver.

US 2005/116835 A1 relates to a device for remote control of an actuator and/or various other building installations. A processing program relating to the operation, which is stored in directly executable form can be updated by putting the system into a learning mode by use of a command transmitter.

US 5 781 143 A relates to a method and an apparatus for storing unique identity codes of a plurality of wireless transmitters into a permanent memory of a receiver control. Upon power-up the wireless transmitters send signals having longer than normal preambles together with the identity code to the receiver. The receiver checks for duplicates of the identity code and if none is found, the receiver stores the identity code together with a transmitter number. At the same time, one is subtracted from a predefined quantity and when zero is reached, no more identity codes will be stored.

As it will be understood, the prior art methods and system may be related to a number of drawbacks, when it is desired to reconfigure one or more slave devices, e.g. to a replacement remote controller, in particular when the slave devices are not readily accessible and/or when a relatively large number of slave devices are involved.

It is an object of the invention to provide a method of enabling a new, a replacement or an additional remote controller to be configured to control one or more slave devices, which previously from a virgin state have been configured by an original remote controller.

It is in particular an object to provide such a method for enabling one or more slave devices to be reconfigured to be controllable by e.g. a new, a replacement or an additional remote controller.

In particular, it is an object to provide such a method for one or more slave devices which are normally not within reach.

It is also an object to provide such a method, which facilitates a reconfiguration of a plurality of slave devices in an expedient manner.

It is also an objective to provide a slave device, which facilitates such a method.

These and other objectives are achieved by embodiments of the invention as it will be explained in further detail in the following.

### Summary

The invention for which protection is sought is defined by the appended claims. In particular, the invention relates to a method as specified in claim 1, while dependent claims 2-14 set out preferred embodiments of the method of the invention. Hereby it is achieved that in case the original remote controller or master (where it will be understood that a remote controller may comprise devices such as a general controller, a keypad, a smartphone, a tablet computer, etc., as it will be apparent to a skilled person), with which the initial configuration has been performed, is damaged, has been lost or for some other reason is not available, it is possible to configure a new remote controller to be used to control the slave device or the slave devices, if more than one is involved. This requires only that the reconfiguration data RD is available to the user, for example because it has been memorized, written down or in any other suitable manner kept by or provided to the user when or after it was stored by the slave device, so that the user may now for example input the relevant part of the reconfiguration data RD in the new remote controller and transmit this by a command signal, e.g. a discover request from the new remote controller. The relevant part of the reconfiguration data RD, e.g. a system ID, may be a name, which the user has chosen for the system or which has been e.g. generated and informed to the user, for example "HOMEX2". It will be apparent that this command will be broadcast, since the address of the slave device is not known to the new remote controller, but the slave device, which has stored the same relevant part of the reconfiguration data RD, e.g. "HOMEX2", will respond to the received command by entering a discover mode, wherein it will engage in further communication with the new remote controller in order to end up with a reconfiguration, wherein the slave device can be controlled by the new remote controller.

Furthermore, since the discover mode and the possibility of performing a reconfiguration is initiated in a wireless manner, it is achieved that the method can be applied readily also in cases, where the slave device is not within normal reach or perhaps in practice not accessible by the normal user, and also in cases, where a plurality of slave devices are involved, where e.g. the problem of having to gain access to the slave devices, for example by climbing a ladder in order to activate e.g. a pairing button may be considerable and highly impractical if not in reality impossible to e.g. the normal user.

According to an embodiment, said reconfiguration data RD may be at least partly user-defined.

Hereby, it is achieved that the user can define reconfiguration data RD, e.g. names, numbers, etc., which will be relatively easy to memorize or which for other reasons are practicable and expedient for the user. In this connection, it is noted that in general when referring to the user, it may be a user, an installer of e.g. the system, any other person involved when e.g. setting up a system, etc. that is referred to. As mentioned, the reconfiguration data RD may be at least partly user-defined, but it will be understood that all part of the reconfiguration data RD may be user-defined. Thus, it is a possibility that only a part such as the name ID for a system is defined by the user, whereas another part may be provided in another manner, e.g. predefined, defined, generated, suggested by a system, etc.

Said reconfiguration data RD is at least partly provided to the user, for example generated by a remote controller.

Hereby, a part of the reconfiguration data RD or all the reconfiguration data RD may be provided to the user, for example because it has been predefined by e.g. a controller or generated by the controller, e.g. as recover data, when setting up a system, and where the user, installer, etc, is instructed to take care of the reconfiguration data RD by keeping it for possible future use, e.g. by memorizing it, writing it down, etc. Hereby, the user will be readily provided with the data and will not need to be bothered with defining such data and furthermore, the reconfiguration data RD may be more neutral than data, which is defined by the user and thus tends to be more personalized.

According to an embodiment, said at least part of said reconfiguration data RD may comprise a system ID (SID), for example a user-defined system ID (SID).

Hereby, it is achieved that the entering of the slave device in the discover mode can be performed in a user-friendly and expedient manner, since the system ID may have been defined by the user or generated in such a manner that it will be possible for the user perhaps years later to e.g. remember the system ID or in another manner gain access to the system ID, for example because it has been written down or noted in another manner.

According to a further embodiment, said reconfiguration data RD may at said previous configuration step have been transmitted to said slave device by said at least one remote controller.

Hereby, it is achieved that the entering of the reconfiguration data RD in the respective slave devices, when the initial or original configuration is performed, can be done in an expedient and effortless manner, e.g. in connection or combination with the usual steps taken by the user or installer, when the system is configured, and where essentially the user or installer only needs to e.g. define or note the data, e.g. name and code/password, and keep this ready for possible future use, e.g. written down, memorized or the like. Thus, this step will not be felt to put an extra burden on the user or installer in the initial configuration step, which adds to the user-friendliness of the method.

According to a further embodiment, said previous configuration step may further comprise that the slave device has transmitted an address ID of the slave device to said at least one remote controller and that a system key SK has been stored by said slave device.

Hereby, it is achieved at the initial configuration that the slave device or the slave devices, if more than one is involved, has stored a system key SK, which serves to ensure that the slave device(s) can only be controlled by a remote controller having the same system key SK. Similarly, it is then clear that when the original remote controller and its stored system key SK is not available, the only manner of configuring the slave device(s) to be operated by a new remote controller, if it is not possible to e.g. erase the system key SK in the slave device(s), thereby bringing the slave device(s) in a new virgin mode is to gain access to the system key SK stored in the slave device(s) and use this in the new configuration, which is made available by the present invention.

According to a further embodiment, said at least part of said reconfiguration data RD may have been entered into said further remote controller as a user input.

Hereby, the re-configuration process may be initiated in an expedient manner, whereafter the further or new remote controller may be configured for readily broadcasting a command comprising the inputted data, e.g. in the form of a discover request to the slave devices within transmission reach.

According to a further embodiment, said slave device may in response to a request from said further remote controller comprising said at least part of said reconfiguration data transmit its address ID to said further remote controller.

Hereby it is achieved that the slave device or slave devices, if more than one is involved, transmit(s) the respective address(es) to the further, e.g. the new remote controller, which has broadcasted the discover request, and the new remote controller will thus have achieved that it has received confirmation from the slave device or devices, which has/have received the discover request and which has/have stored the same e.g. system ID as comprised in the discover request, and furthermore the new remote controller can readily store the received address(es) with the knowledge that these slave devices may be made to be part of the new configuration, depending on the further communication.

According to a further embodiment, said slave device may in response to at least a further part of said reconfiguration data (RD) having been transmitted to the slave device by the further remote controller transmit its system key (SK) to said further remote controller.

Hereby, an added security against un-authorized reconfiguration can be achieved since the further part of said reconfiguration data (RD) has to be entered by the user and transmitted to the slave devices, which responded to the discover request, and whereafter the respective slave devices check that they comprise corresponding data, stored in connection with the initial configuration.

According to a further embodiment, said at least a further part of said reconfiguration data RD may comprise a code PW.

Expediently, said further part of said reconfiguration data RD may be a password PW, for example defined by the user, provided or generated by e.g. the remote controller in connection with the initial configuration, e.g. a four digit number code or the like, for example "9876", which the user or installer has e.g. memorized, written down or kept in the same manner as for example the system ID. Hereby, an enhanced user-friendliness has been facilitated.

According to a further embodiment, one or more transmissions by said slave device and/or said further remote controller may comprise encryption of transmitted data and/or other methods of securing transmission(s), for example comprising public/private asymmetric encryption.

Hereby, an added security against un-authorized reconfiguration and/or taking over of slave devices can be achieved since the wireless transmissions of data can be protected from being copied, intercepted, etc. by use of encryption means, by use of security arrangements already comprised in the devices and remote controllers, etc. For example, the use of random numbers in connection with encryption arrangements may be used, as it will be explained later on, for example a random number provided by a slave device and transmitted to a remote controller for encryption may be used, and furthermore, the use of e.g. a transfer key TK, which may be comprised in the slave devices and remote controllers from new may be used in connection with such secure transmission arrangements, as it will be exemplified later on. It will be apparent to a skilled person that a wide variety of arrangements known within the field may be used and/or combined in connection with the present embodiments.

According to a further embodiment, said system key SK transmitted by said slave device may be stored by said further remote controller for use in connection with subsequent controlling of said slave device.

Hereby, it can be achieved that the system key SK may be used for ensuring that the slave device or slave devices already storing the system key SK can be controlled by the new remote controller, e.g. paired with the new remote controller. Thus, if more than one slave device have responded to the discover request from the new remote controller and the new remote controller has reached the step, where one of the slave devices has returned its system key SK, it may not be necessary to request the other slave devices to return their system key SK, but instead the new remote controller can verify with each of these, that they comprise the same system key SK, e.g. by the new remote controller transmitting a challenge to the slave devices and checking that the slave devices respond correctly to the challenge. Thereby, the procedure may be simplified.

According to a further embodiment, said at least part of said reconfiguration data RD transmitted by said further remote controller may be received by a plurality of said slave devices and wherein a group of said plurality of slave devices, which have stored reconfiguration data RD corresponding to the received reconfiguration data RD may be reconfigured to be controllable by said further remote controller.

It is noted in this connection that further slave devices may have received the discover request from the further, e.g. the new remote controller, but that only these storing the at least part of said reconfiguration data RD, e.g. the system ID (SID) have responded. Of these, some may not comprise the same further part of said reconfiguration data (RD), e.g. the password PW, or even the same system key SK as the slave device first responding, and these will not be reconfigured.

According to a further embodiment, said further remote controller may in a previous or subsequent step have been paired with a further group comprising a further plurality of slave devices and whereby a merging of said group and said further group of slave devices may be performed in order for said plurality of slave devices comprised in said merged groups to be controllable by said further remote controller. Hereby, it is made possible to re-configure a remote controller, which already is configured to control one or more slave devices, e.g. a group, to control in addition one or more further slave devices, e.g. another group, whereby in reality a merging of the two groups can be achieved. It will be apparent to a skilled person that more than two groups can be merged in a similar manner. It is noted in this respect that, as indicated above, a group may comprise only one slave device.

According to a further embodiment, said reconfiguration data RD may comprise first and second data, said first data being open data (SID) for being broadcasted and said second data being authentication data (PW), which when transmitted is encrypted.

The invention further relates to a system comprising at least one slave device and at least one remote controller and one further remote controller as specified in claim 15, while dependent claims 16-17 set out preferred embodiments of the system of the invention.

Hereby, a slave device is provided, whereby it is achieved that in case the original remote controller or master, with which the slave device initially, e.g. in its virgin mode, has been configured, is damaged, has been lost or for some other reason is not available, it is possible to configure a new remote controller to be used to control the slave device or the slave devices, if more than one is involved. This requires only that the reconfiguration data RD, which may be user-defined, user-specified, provided to the user in various manners, for example predefined, generated and provided by e.g. a remote controller used in connection with the set-up, etc., has been memorized, written down or in any other suitable manner kept by the user, so that the user may now for example input the relevant part of the reconfiguration data RD in the new remote controller and transmit this by a command signal, e.g. a discover request from the new remote controller. The relevant part of the reconfiguration data RD, e.g. a system ID, may be a name, which the user has chosen for the system or which has been e.g. generated and informed to the user, for example "HOMEX2". It will be apparent that this command will be broadcast, since the address of the slave device is not known to the new remote controller, but the slave device, which has stored the same relevant part of the reconfiguration data RD, e.g. "HOMEX2", will respond to the received command by entering a discover mode, wherein it will engage in further communication with the new remote controller in order to end up with a reconfiguration, wherein the slave device can be controlled by the new remote controller.

Furthermore, since the discover mode and the possibility of performing a reconfiguration is initiated in a wireless manner, it is achieved that the slave device can be entered into the discover mode in order to initiate a reconfiguration also in cases, where the slave device is not within normal reach or perhaps in practice not accessible by the normal user, and also in cases, where a plurality of slave devices are involved, where e.g. the problem of having to gain access to the slave devices, for example by climbing a ladder in order to activate e.g. a pairing button may be considerable and highly impractical if not in reality impossible to e.g. the normal user.

According to a further embodiment, said slave device may be adapted to, in response to a request from said further remote controller, said request comprising at least part of said reconfiguration data RD, to transmit its address ID to said further remote controller and/or wherein said slave device is adapted to, in response to a request from said further remote controller comprising at least a further part of said reconfiguration data RD to transmits its system key SK to said further remote controller.

Hereby it is achieved that the slave device or slave devices, if more than one is involved, transmit(s) the respective address(es) to the further, e.g. the new remote controller, which has broadcasted the discover request, and the new remote controller will thus have achieved that it has received confirmation from the slave device or devices, which has/have received the discover request and which has/have stored the same e.g. system ID as comprised in the discover request, and furthermore the new remote controller can readily store the received address(es) with the knowledge that these slave devices may be made to be part of the new configuration, depending on the further communication. Furthermore, an added security against un-authorized reconfiguration can be achieved since the further part of said reconfiguration data RD has to be entered by the user and transmitted to the slave devices, which responded to the discover request, and whereafter the respective slave devices check that they comprise corresponding data, stored in connection with the initial configuration.

According to a further embodiment, said re-configuration of said slave device may comprise that a system key SK previously stored by said slave device is transmitted to said further remote controller, and that said slave device may be paired with said further remote controller to be controllable by this further remote controller.

Hereby, It can be achieved that the system key SK may be used for ensuring that the slave device (or slave devices) already storing the system key SK can be controlled by the new remote controller, e.g. paired with the new remote controller. Furthermore, if more than one slave device have responded to the discover request from the new remote controller and the new remote controller has reached the step, where one of the slave devices has returned its system key SK, it may not be necessary to request the other slave devices to return their system key SK, but instead the new remote controller can verify with each of these, that they comprise the same system key SK, e.g. by the new remote controller transmitting a challenge to the slave devices and checking that the slave devices respond correctly to the challenge. Thereby, the task of reconfiguring a plurality of slave devices may be made in a faster and easier manner.

Said reconfiguration data RD stored by said slave device may be at least partly user-defined.

Hereby, it is achieved that the user can define reconfiguration data RD, e.g. names, numbers, etc., which will be relatively easy to memorize or which for other reasons are practicable and expedient for the user. In this connection, it is noted that in general when referring to the user, it may be a user, an installer of e.g. the system, any other person involved when e.g. setting up a system, etc. that is referred to. As mentioned, the reconfiguration data RD may be at least partly user-defined, but it will be understood that all the reconfiguration data RD may be user- defined. Thus, it is a possibility that only a part such as the name ID for a system is defined by the user, whereas another part may be provided in another manner, e.g. predefined, defined by a system, etc.

Further, said reconfiguration data RD stored by said slave device may be at least partly provided to the user, for example generated by a remote controller.

Hereby, a part of the reconfiguration data RD or all the reconfiguration data RD may be provided to the user, for example because it has been predefined by e.g. a controller or generated by the controller, e.g. as recover data, when setting up a system, and where the user, installer, etc., is instructed to take care of the reconfiguration data RD by keeping it for possible future use, e.g. by memorizing it, writing it down, etc. Hereby, the user will be readily provided with the data and will not need to be bothered with defining such data and furthermore, the reconfiguration data RD may be more neutral than data, which is defined by the user and thus tends to be more personalized.

### The figures

The invention will be explained in further detail below with reference to the figures of which
- Fig. 1: shows in a schematic manner a number of slave devices, which have been configured to be operated by a remote controller,
- Fig. 2: shows an example of a slave device or actuator in a schematic manner,
- Fig. 3: illustrates an exemplary method of performing encrypted transmission, and
- Fig. 4: shows in a schematic manner corresponding to Fig. 1 a plurality of slave devices, which have been configured in two groups, each one controllable by a remote controller.

### Detailed description

Examples/aspects/embodiments not falling within the scope of the appended claims are not according to the invention and are present for illustration purposes only.

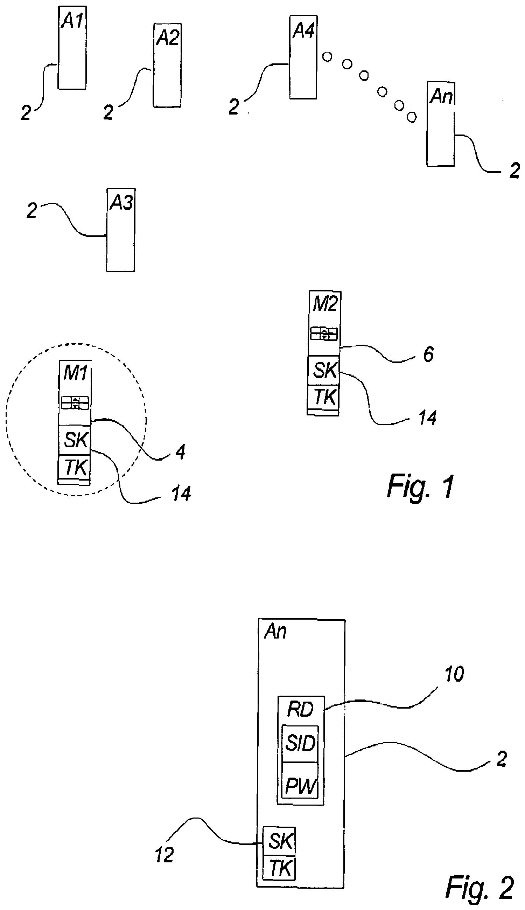

An exemplary embodiment of the invention is shown in Fig. 1 in a schematic manner, showing a number of slave devices 2, also designated A1, A2, A3, A4An, which slave devices for example may be located in or at a building or another locality. These slave devices 2 have been configured to be operated by a remote controller 4, also designated M1, at an initial configuration step, when the slave devices 2 were in a virgin mode. This original remote controller 2 is shown in Fig. 1 encircled by a dash-line, the significance of which will be explained later. At this initial configuration step, which may have been performed as disclosed in the above-mentioned EP 1340198 B1 or in a similar manner, a code serving as a system key SK, which is shown in e.g. a storage 14 of the remote controller 4, was transmitted from the original remote controller 4 to the slave devices 2, where the system key SK was stored. Further, the original remote controller 4 has during the initial configuration stored the addresses of the slave devices. Furthermore, the slave devices 2 and the original remote controller 4 may comprise e.g. a transfer key TK, shown for example in the storage 14 of the remote controller 4, which transfer key may be used in connection with secure and encrypted communication between the respective devices. Furthermore, it will be understood that the devices comprise wireless transmission and receiving means as well as commonly known operative elements for e.g. performing wireless transmission, secure transmission, verification, etc., which are well-known to a person skilled within the field.

Also in connection with the initial configuration, data, which will be referred to as re-configuration data RD, has been provided, for example specified/defined by the user and/or the installer, provided by the system, for example generated by the original remote controller, or provided in any other suitable manner, which reconfiguration data RD has been transmitted by means of for example the original remote controller 4 or another transmitter to the respective slave devices 2, where it has been stored. This re-configuration data RD, which as mentioned may be provided in many various manners, e.g. user-specified, specified by the installer or another person, provided/generated by a device in the system, for example the original remote controller or the like, is furthermore kept, memorized, written down or the like in such a manner that a user at a later point in time may use it again, which will be exemplified in the following. For the purpose of this, an example of a slave device or actuator 2 is shown in a schematic and enlarged manner in Fig. 2, where it is shown that the slave device 2 as explained above has stored the system key SK and the transfer key TK, e.g. in a storage 12.

Furthermore, it is shown in Fig. 2 that re-configuration data RD has been received and stored by the slave device 2, e.g. stored in a storage 10. In this example, the reconfiguration data RD comprises a system ID (SID) and furthermore a code serving as a password PW. As explained above, one or both of these may have been user-defined in connection with the initial configuration and one or both may have been provided in another manner, for example provided, generated, suggested or the like by for example the original remote controller. It is also possible that one or both of these have been selected from a number of possibilities suggested by the e.g. remote controller. When the system ID (ID) and the password PW are transmitted to the slave devices 2 in the system, one or both of these may be transmitted in an encrypted manner, for example using the transfer key TK, which is stored by all slave devices and controllers, as encryption means. The system ID (SID) may be transmitted in clear text, but preferably the password PW is encrypted before being transmitted, e.g. encrypted using the transfer key TK

With reference to Figs. 1 and 2, an example of the use of the re-configuration data RD will now be explained.

When for example the original remote controller 4 has been lost, has been damaged or for other reasons has become inoperative as indicated with the encircling by the dash-line, another remote controller 6, also designated M2, can be configured to control the slave devices 2, which store the re-configuration data RD. It will be apparent that the following procedure can also be done, if an extra remote controller is desired in addition to the existing original remote controller. This procedure can be done in the following manner.
1) First, the relevant part of the re-configuration data RD is inputted, e.g. the system ID (SID), which may be inputted by means of a keyboard on the remote controller M2, and a command or discover signal is transmitted, e.g, broadcasted from the remote controller M2 requesting the slave devices 2 that receive the command signal and that recognize the system ID (SID) comprised in the command signal to respond.
2) The slave devices 2 that have received the command signal and which have stored the system ID (SID) corresponding to the system ID (SID) comprised in the command signal replies to the remote controller M2, e.g. typically in timeslots, with their respective addresses and possibly other information, such as the type of the slave devices and other communication data that is needed or desirable.
3) The remote controller M2 now knows the slave devices 2 in the system and their addresses. The remote controller M2 now transmits it password PW to one of the slave devices 2 in the system, preferably in a secure manner, e.g. in an encrypted manner. An example of this will be explained later. The slave device 2, to which the password PW is transmitted, can be selected in various manners, as it will be apparent to a skilled person, e.g. randomly, by selecting an address having the lowest number, etc.
4) When the slave device 2 receives the password PW, it is verified by the slave device 2 that the received password corresponds to the password PW stored in the slave device 2.
5) If this is the case, the slave device 2 transmits its system key SK to the remote controller M2, preferably also in an encrypted manner, an example of which will be explained later.
6) When the remote controller M2 has received the system key SK from the selected slave device 2, the remote controller M2 may verify with each of the other slave devices that responded in connection with step 2) above that they know the same system key SK as received in step 5) above. This can be done using system verification, for example by the remote controller M2 transmitting a challenge command to each of the slave devices, whereby a correct response is depending on that the slave device comprises the same system key SK as used by the remote controller M2. When this verification has been performed, all slave devices, which responded in step 2) above, have been verified to be part of the system and are normally stored e.g. with their addresses, type, etc. in the remote controller M2 and can now be controlled.

In connection with step 3) above it is mentioned that the password PW is transmitted to only one of the slave devices 2 in order to have this return its system key SK to the remote controller M2. Instead, it is a possibility that steps 3), 4) and 5) are repeated for each and every one of the slave devices 2, and that the remote controller M2 in step 6) checks that all slave devices 2 have returned the same system key SK. However, this may be less preferably in relation to e.g. processing time, etc.

As mentioned above, the transmitted signals in connection with the discovery procedure and the reconfiguration may include encryption of the signals, e.g. using the transfer key TK as encryption means. The broadcast of the system ID (SID) in step 1) above may be performed in clear text, but it may also be performed in encrypted manner.

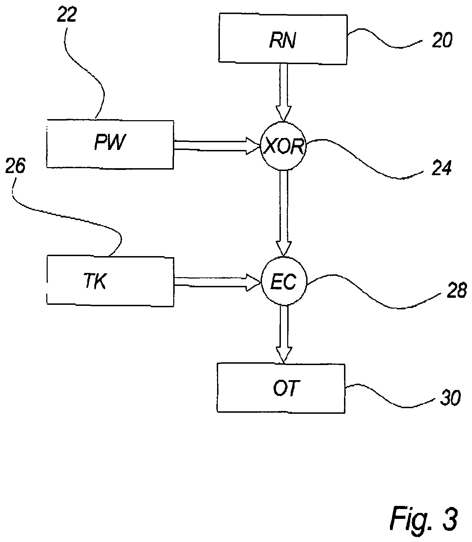

As mentioned above in connection with step 3), the remote controller M2 may preferably, due to the security aspects related to the password PW, transmit its password PW to one of the slave devices 2 in the system in a secure and encrypted manner, an example of which will be explained with reference to Fig. 3. Here, it is shown that at 20, the remote controller M2 requests a random number RN from the slave device 2 and the slave device 2 returns this to the remote controller M2. The random number RN, which serves to ensure the uniqueness of the message, is XOR'ed at 24 with the password (PW) 22 by the remote controller M2 and furthermore an encryption EC is performed at 28, using the transfer key (TK) 26. The output (OT) is at 30 transferred to the slave device 2. Here, the slave device may for example have performed the same process, since it knows the random number RN and has stored both the password PW and the transfer key TK, and the result can be compared with the output OT received from the remote controller M2. Correspondence confirms to the slave device 2 that the remote controller M2 comprises the correct password PW and the slave device can return its system key SK to the remote controller M2 as explained in step 5) above, for example encrypted using the random number RN that the remote controller M2 requested as explained above.

It will be apparent to a skilled person that other manners of performing encryption and secure communication are possible in connection with the above described transmissions and steps, for example public/private asymmetric encryption.

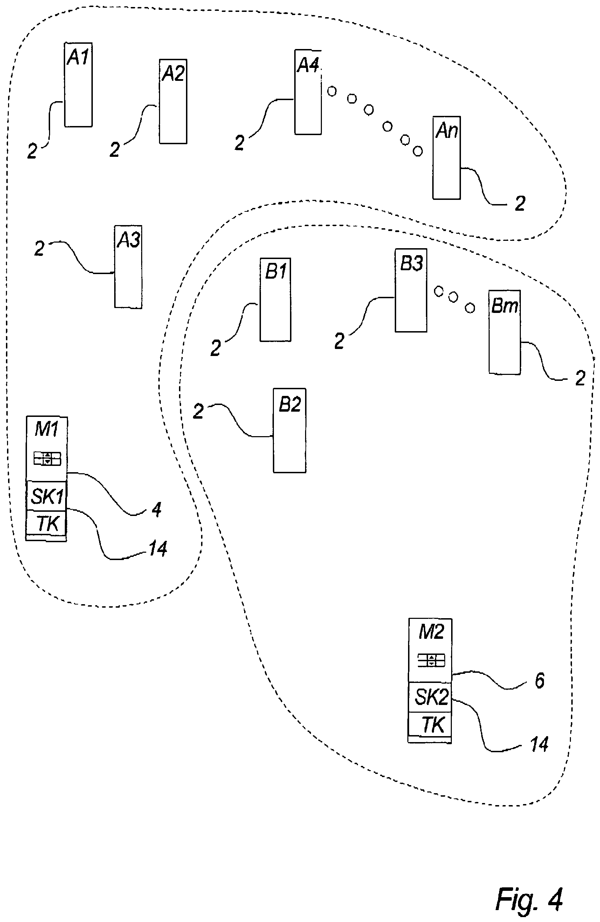

A further exemplary embodiment of the invention is shown in Fig. 4 in a schematic manner corresponding to Fig. 1, showing a number of slave devices 2, which slave devices for example may be located in or at a building or another locality. These slave devices 2 comprises two groups, which may have been configured at different times, at different installations, etc., but essentially two groups are involved, which are controllable by different remote controllers or masters 4 and 6. For example, the slave devices designated A1, A2, A3, A4 --- An have been configured to be operated by a remote controller 4 (M1) at an initial configuration step, when the slave devices 2 were in a virgin mode, and correspondingly the slave devices designated B1, B2, B3 --- Bm have been configured to be operated by a remote controller 6 (M2) at an initial configuration step, when the slave devices 2 were in a virgin mode.

As it will be understood, the slave devices 2 and the remote controllers 4 and 6 may have stored the same transfer key TK, which may be common for devices of e.g. a certain type of equipment, but the remote controller 4 and the slave devices A1, A2, A3, A4 --- An have stored a system key SK1, which is different from a system key SK2 stored by the remote controller M2 and the slave devices B1, B2, B3 --- Bm. Thus, it will not be possible to use the remote control M2 for controlling the slave devices A1, A2, A3, A4 --- An as it will neither be possible to use the remote control M1 for controlling the slave devices B1, B2, B3 --- Bm.

As explained in connection with Figs. 1 and 2, the slave devices have in connection with the virgin configuration received and stored re-configuration data RD, for example may the slave devices A1, A2, A3, A4 --- An have stored a system ID (SID1) and a password PW1, while the slave devices B1, B2, B3 --- Bm may have stored a system ID (SID2) and a password PW2.

Thus, by using the procedure described previously comprising the steps 1 to 6, the remote controller M1 may, when the user inputs the re-configuration data RD, starting with the system ID SID2 for a discover command to be broadcasted, etc., and proceeds in accordance with the procedure, be configured for controlling the slave devices B1, B2, B3 --- Bm in addition to the slave devices A1, A2, A3, A4 --- An.

In this connection it is noted that when for example the user inputs the system ID (SID2) in the remote controller M1 and broadcasts this by the remote controller, it is apparent that all slave devices A1, A2, A3, A4 --- An and B1, B2, B3 --- Bm, that are within transmission range, will receive this discover request and check that the system ID, in this case SID2, is the same as they have stored. Thus, the slave devices A1, A2, A3, A4 --- An will not respond to the discover request, but the slave devices B1, B2, B3 --- Bm will respond by transmitting their addresses to the remote controller M1 as described above in connection with steps 1 to 6. Further, the procedure will continue as described, with the remote controller requesting a random number for the secure transmission of the password P2, etc.

Thus, the two groups of slave devices may in this manner be merged to be operated as slave devices in a single group, which can be controlled by one remote controller. A similar procedure can be done with the remote controller M2.

## Claims

1. A method of enabling at least one slave device (2) to enter a discover mode, said slave device (2) having been configured to be controllable by at least one remote controller (4) at a previous configuration step, whereby said at least one slave device (2) has been paired with said at least one remote controller (4) to be controllable by said at least one remote controller (4), said method further comprising that
- reconfiguration data (RD) has been stored by said slave device (2),
- at least part of the reconfiguration data (RD) is made available or provided to a user and subsequently to a further remote controller (6) that is new and is not paired to said at least one slave device,
- the further remote controller (6) wirelessly transmits at least part of said reconfiguration data (RD) by broadcasting a command signal in the form of a discover request to slave devices,
- at least part of said reconfiguration data (RD) is wirelessly received by said at least one slave device, and wherein
- said at least one slave device (2) when having received said at least part of said reconfiguration data (RD) and verified correspondence with the stored reconfiguration data, enters said discover mode, and wherein by entering said discover mode
- a re-configuration of said at least one slave device (2) is enabled in dependence on further wireless communication with said further remote controller (6), whereby said at least one slave device (2) is reconfigured to be controllable by the further remote controller (6).

2. The method according to claim 1, wherein said reconfiguration data (RD) is at least partly user-defined.

3. The method according to any of claims 1-2, wherein said at least part of said reconfiguration data (RD) comprises a system ID (SID).

4. The method according to any of the preceding claims, wherein said reconfiguration data (RD) at said previous configuration step has been transmitted to said at least one slave device (2) by said at least one remote controller (4).

5. The method according to any of the preceding claims, wherein said previous configuration step further comprises that the at least one slave device (2) has transmitted an address ID of the at least one slave device to said at least one remote controller (4) and that a system key (SK) has been stored by said at least one slave device (2).

6. The method according to any of the preceding claims, wherein said at least part of said reconfiguration data (RD) has been entered into said further remote controller (6) as a user input.

7. The method according to any of the preceding claims, wherein said at least one slave device (2) in response to a request from said further remote controller (6) comprising said at least part of said reconfiguration data transmits its address ID to said further remote controller (6).

8. The method according to claim 5, wherein said at least one slave device (2) in response to at least a further part of said reconfiguration data (RD) having been transmitted to the at least one slave device by the further remote controller (6) transmits its system key (SK) to said further remote controller (6).

9. The method according to claim 8, wherein said at least a further part of said reconfiguration data (RD) comprises a code (PW).

10. The method according to any of the preceding claims, wherein one or more transmissions by said at least one slave device (2) and/or said further remote controller (6) comprises encryption of transmitted data and/or other methods of securing transmission(s).

11. The method according to claim 8, wherein said system key (SK) transmitted by said at least one slave device (2) is stored by said further remote controller (6) for use in connection with subsequent controlling of said slave device.

12. The method according to any of the preceding claims, wherein said at least part of said reconfiguration data (RD) transmitted by said further remote controller (6) is received by a plurality of said slave devices (2) and wherein a group (A1, A2, A3, A4 - An) of said plurality of slave devices, which have stored reconfiguration data (RD) corresponding to the received reconfiguration data (RD) are reconfigured to be controllable by said further remote controller (6).

13. The method according to claim 12, wherein said further remote controller (6) in a previous or subsequent step has been paired with a further group (B1, B2, B3 - Bm) comprising a further plurality of slave devices and whereby a merging of said group and said further group of slave devices is performed in order for said plurality of slave devices comprised in said merged groups to be controllable by said further remote controller.

14. The method according to any of the preceding claims, wherein said reconfiguration data (RD) comprises first and second data, said first data being open data (SID) for being broadcasted and said second data being authentication data (PW), which when transmitted is encrypted.

15. A system comprising at least one slave device (2) and at least one remote controller (4), wherein said at least one slave device (2) is configured to be controllable by said at least one remote controller (4), said at least one slave device having been configured at a previous configuration step, whereby said at least one slave device (2) has been paired with said at least one remote controller (4) to be controllable by said at least one remote controller, wherein
- said at least one slave device is adapted to store reconfiguration data (RD), wherein
- said system further comprises a further remote controller (6) that is new to and is not paired to said at least one slave device (2), said further remote controller (6) is adapted to be provided by a user with at least part of the reconfiguration data (RD) and further adapted to wirelessly broadcast at least part of the reconfiguration data (RD) by a command signal in the form of a discover request to slave devices, and wherein
- said at least one slave device (2) is configured to, upon wireless receipt of at least part of said reconfiguration data (RD) and verification of correspondence with the stored reconfiguration data, enter a discover mode and be enabled to be re-configured to be controllable by the further remote controller (6) in dependence on further wireless communication with the further remote controller (6).

16. The system according to claim 15, wherein said at least one slave device (2) is adapted to, in response to a request from said further remote controller (6), said request comprising at least part of said reconfiguration data (RD), to transmit its address ID to said further remote controller (6) and/or wherein said at least one slave device is adapted to, in response to a request from said further remote controller (6) comprising at least a further part of said reconfiguration data (RD) to transmits its system key (SK) to said further remote controller.

17. The system according to claim 16, wherein said re-configuration of said at least one slave device (2) comprises that a system key (SK) previously stored by said at least one slave device is transmitted to said further remote controller (6), and that said at least one slave device (2) is paired with said further remote controller 6) to be controllable by this further remote controller.

## Patentansprüche

1. Verfahren, das es mindestens einer Slave-Vorrichtung (2) ermöglicht, in einen Entdeckungsmodus einzutreten, wobei die Slave-Vorrichtung (2) in einem vorausgehenden Konfigurationsschritt so gestaltet worden ist, dass sie durch mindestens eine Fernsteuereinheit (4) gesteuert werden kann, wobei die mindestens eine Slave-Vorrichtung (2) mit der mindestens einen Fernsteuereinheit (4) gekoppelt ist, so dass sie durch die mindestens eine Fernsteuereinheit (4) gesteuert werden kann, wobei das Verfahren ferner folgendes umfasst:
- Rekonfigurationsdaten (RD) werden von der Slave-Vorrichtung (2) gespeichert,
- wenigstens ein Teil der Rekonfigurationsdaten (RD) wird einem Benutzer zur Verfügung gestellt oder bereitgestellt und in der Folge einer weiteren Fernsteuereinheit (6), die neu ist und die nicht mit der mindestens einen Slave-Vorrichtung gekoppelt ist,
- die weitere Fernsteuereinheit (6) übermittelt drahtlos wenigstens einen Teil der Rekonfigurationsdaten (RD) durch Übermittlung eines Befehlssignals in Form einer Entdeckungsanforderung an Slave-Vorrichtungen,
- wenigstens ein Teil der Rekonfigurationsdaten (RD) wird drahtlos von der mindestens einen Slave-Vorrichtung empfangen, und wobei
- die mindestens eine Slave-Vorrichtung (2), wenn sie den wenigstens einen Teil der Rekonfigurationsdaten (RD) empfangen hat und die Übereinstimmung mit den gespeicherten Rekonfigurationsdaten bestätigt hat, in den Entdeckungsmodus eintritt, und wobei durch Eintreten in den Entdeckungsmodus
- eine Rekonfiguration der mindestens einen Slave-Vorrichtung (2) abhängig von einer weiteren drahtlosen Kommunikation mit der weiteren Fernsteuereinheit (6) ermöglicht wird, wobei die mindestens eine Slave-Vorrichtung (2) so rekonfiguriert wird, dass sie durch die weitere Fernsteuereinheit (6) gesteuert werden kann.

2. Verfahren nach Anspruch 1, wobei die Rekonfigurationsdaten (RD) wenigstens teilweise benutzerdefiniert sind.

3. Verfahren nach einem der Ansprüche 1 bis 2, wobei wenigstens der Teil der Rekonfigurationsdaten (RD) eine Systemkennung (SID) umfasst.

4. Verfahren nach einem der vorstehenden Ansprüche, wobei die Rekonfigurationsdaten (RD) in dem vorausgehenden Konfigurationsschritt durch die mindestens eine Fernsteuereinheit (4) zu der mindestens einen Slave-Vorrichtung (2) übermittelt worden sind.

5. Verfahren nach einem der vorstehenden Ansprüche, wobei es der vorausgehende Konfigurationsschritt ferner umfasst, dass die mindestens eine Slave-Vorrichtung (2) eine Adress-ID der mindestens einen Slave-Vorrichtung an die mindestens eine Fernsteuereinheit (4) übermittelt hat, und dass ein Systemschlüssel (SK) von der Slave-Vorrichtung (2) gespeichert worden ist.

6. Verfahren nach einem der vorstehenden Ansprüche, wobei wenigstens der Teil der Rekonfigurationsdaten (RD) als eine Benutzereingabe in die Fernsteuereinheit (6) eingegeben worden ist.

7. Verfahren nach einem der vorstehenden Ansprüche, wobei die mindestens eine Slave-Vorrichtung (2) als Reaktion auf eine Anforderung von der weiteren Fernsteuereinheit (6), die wenigstens den Teil der Rekonfigurationsdaten umfasst, ihre Adress-ID an die weitere Fernsteuereinheit (6) übermittelt.

8. Verfahren nach Anspruch 5, wobei die mindestens eine Slave-Vorrichtung (2) als Reaktion darauf, dass mindestens ein weiterer Teil der Rekonfigurationsdaten (RD) durch die weitere Fernsteuereinheit (6) an die mindestens eine Slave-Vorrichtung übermittelt worden ist, ihren Systemschlüssel (SK) an die weitere Fernsteuereinheit (6) übermittelt.

9. Verfahren nach Anspruch 8, wobei der wenigstens eine weitere Teil der Rekonfigurationsdaten (RD) einen Code (PW) umfasst.

10. Verfahren nach einem der vorstehenden Ansprüche, wobei eine oder mehrere Übermittlungen durch die mindestens eine Slave-Vorrichtung (2) und/oder die weitere Fernsteuereinheit (6) eine Verschlüsselung der übermittelten Daten und/oder andere Methoden zum Schutz einer/mehrerer Übermittlung(en) umfassen.

11. Verfahren nach Anspruch 8, wobei der durch die mindestens eine Slave-Vorrichtung (2) übermittelte Systemschlüssel (SK) von der weiteren Fernsteuereinheit (6) zur Verwendung in Verbindung mit der folgenden Steuerung der Slave-Vorrichtung gespeichert wird.

12. Verfahren nach einem der vorstehenden Ansprüche, wobei wenigstens der Teil der durch die Fernsteuereinheit (6) übermittelten Rekonfigurationsdaten (RD) von einer Mehrzahl der Slave-Vorrichtungen (2) empfangen wird, und wobei eine Gruppe (A1, A2, A3, A4 - An) der Mehrzahl von Slave-Vorrichtungen, die den empfangenen Rekonfigurationsdaten (RD) entsprechende Rekonfigurationsdaten (RD) speichern, so rekonfiguriert werden, dass sie durch die weitere Fernsteuereinheit (6) gesteuert werden können.

13. Verfahren nach Anspruch 12, wobei die weitere Fernsteuereinheit (6) in einem vorausgehenden oder folgenden Schritt mit einer weiteren Gruppe (B1, B2, B3 - Bm) gekoppelt worden ist, die eine weitere Mehrzahl von Slave-Vorrichtungen umfasst, und wobei eine Zusammenführung der Gruppe und der weiteren Gruppe von Slave-Vorrichtungen durchgeführt wird, damit die Mehrzahl von Slave-Vorrichtungen in der zusammengeführten Gruppe durch die weitere Fernsteuereinheit gesteuert werden können.

14. Verfahren nach einem der vorstehenden Ansprüche, wobei die Rekonfigurationsdaten (RD) erste und zweite Daten umfassen, wobei die ersten Daten offene Daten (SID) zur Übermittlung sind, und wobei die zweiten Daten Authentifizierungsdaten (PW) sind, die bei Übermittlung verschlüsselt sind.

15. System, das mindestens eine Slave-Vorrichtung (2) und mindestens eine Fernsteuereinheit (4) umfasst, wobei die mindestens eine Slave-Vorrichtung (2) so gestaltet ist, dass sie durch die mindestens eine Fernsteuereinheit (4) gesteuert werden kann, wobei die mindestens eine Slave-Vorrichtung in einem vorausgehenden Konfigurationsschritt konfiguriert worden ist, wobei die mindestens eine Slave-Vorrichtung (2) mit der mindestens einen Fernsteuereinheit (4) gekoppelt ist, so dass sie durch die mindestens eine Fernsteuereinheit gesteuert werden kann, wobei
- die mindestens eine Slave-Vorrichtung Rekonfigurationsdaten (RD) speichern kann,
wobei
- das System ferner eine weitere Fernsteuereinheit (6) umfasst, die neu ist und die nicht mit der mindestens einen Slave-Vorrichtung (2) gekoppelt ist, wobei die weitere Fernsteuereinheit (6) durch einen Benutzer mit wenigstens einem Teil der Rekonfigurationsdaten (RD) bereitgestellt werden kann, und wobei sie ferner drahtlos wenigstens einen Teil der Rekonfigurationsdaten (RD) durch ein Befehlssignal in Form einer Entdeckungsanforderung an Slave-Vorrichtungen drahtlos übermitteln kann, und wobei
- die mindestens eine Slave-Vorrichtung (2) so gestaltet ist, dass sie bei drahtlosem Empfang wenigstens eines Teils der Rekonfigurationsdaten (RD) und Verifizierung der Übereinstimmung mit den gespeicherten Rekonfigurationsdaten in einen Entdeckungsmodus eintreten kann und rekonfiguriert werden kann, so dass sie durch die weitere Fernsteuereinheit (6) abhängig von weiterer drahtloser Kommunikation mit der weiteren Fernsteuereinheit (6) gesteuert werden kann.

16. System nach Anspruch 15, wobei die mindestens eine Slave-Vorrichtung (2) als Reaktion auf eine Anforderung von der weiteren Fernsteuereinheit (6), wobei die Anforderung wenigstens einen Teil der Rekonfigurationsdaten (RD) umfasst, ihre Adress-ID an die weitere Fernsteuereinheit (6) übermitteln kann, und/oder wobei die mindestens eine Slave-Vorrichtung als Reaktion auf eine Anforderung von der weiteren Fernsteuereinheit (6), die mindestens einen weiteren Teil der Rekonfigurationsdaten (RD) umfasst, ihren Systemschlüssel (SK) an die weitere Fernsteuereinheit übermitteln kann.

17. System nach Anspruch 16, wobei die Rekonfiguration der mindestens einen Slave-Vorrichtung (2) es umfasst, dass ein Systemschlüssel (SK), der zuvor von der mindestens einen Slave-Vorrichtung gespeichert worden ist, an die weitere Fernsteuereinheit (6) übermittelt wird, und dass die mindestens eine Slave-Vorrichtung (2) mit der weiteren Fernsteuereinheit 6) gekoppelt wird, so dass sie durch die weitere Fernsteuereinheit gesteuert werden kann.

## Revendications

1. Procédé pour permettre à au moins un dispositif esclave (2) d'entrer dans un mode de découverte, ledit dispositif esclave (2) ayant été configuré pour pouvoir être commandé par au moins un dispositif de commande à distance (4) à une étape de configuration précédente, ledit au moins un dispositif esclave (2) ayant été apparié avec ledit au moins un dispositif de commande à distance (4) pour pouvoir être commandé par ledit au moins un dispositif de commande à distance (4), ledit procédé comprenant en outre les étapes suivantes
- les données de reconfiguration (RD) ont été stockées par ledit dispositif esclave (2),
- au moins une partie des données de reconfiguration (RD) est mise à disposition ou fournie à un utilisateur et ensuite à un autre dispositif de commande à distance (6) qui est nouveau et n'est pas apparié audit au moins un dispositif esclave,
- l'autre dispositif de commande à distance (6) transmet sans fil au moins une partie desdites données de reconfiguration (RD) en diffusant un signal de commande sous la forme d'une demande de découverte à des dispositifs esclaves,
- au moins une partie desdites données de reconfiguration (RD) est reçue sans fil par ledit au moins un dispositif esclave, et
- ledit au moins un dispositif esclave (2), après avoir reçu ladite au moins une partie desdites données de reconfiguration (RD) et vérifié la correspondance avec les données de reconfiguration stockées, entrant dans ledit mode de découverte, et en entrant dans ledit mode de découverte
- une reconfiguration dudit au moins un dispositif esclave (2) étant activée en fonction d'une autre communication sans fil avec ledit autre dispositif de commande à distance (6), moyennant quoi ledit au moins un dispositif esclave (2) est reconfiguré pour pouvoir être commandé par l'autre dispositif de commande à distance (6).

2. Procédé selon la revendication 1, lesdites données de reconfiguration (RD) étant au moins partiellement définies par l'utilisateur.

3. Procédé selon la revendication 1 ou 2, ladite au moins une partie desdites données de reconfiguration (RD) comprenant un ID système (SID).

4. Procédé selon l'une quelconque des revendications précédentes, lesdites données de reconfiguration (RD) à ladite étape de configuration précédente ayant été transmises audit au moins un dispositif esclave (2) par ledit au moins un dispositif de commande à distance (4).

5. Procédé selon l'une quelconque des revendications précédentes, ladite étape de configuration précédente comprenant en outre les étapes selon lesquelles l'au moins un dispositif esclave (2) a transmis une ID d'adresse de l'au moins un dispositif esclave audit au moins un dispositif de commande à distance (4) et une clé de système (SK) a été stockée par ledit au moins un dispositif esclave (2).

6. Procédé selon l'une quelconque des revendications précédentes, ladite au moins une partie desdites données de reconfiguration (RD) ayant été entrée dans ledit autre dispositif de commande à distance (6) comme une entrée utilisateur.

7. Procédé selon l'une quelconque des revendications précédentes, ledit au moins un dispositif esclave (2) en réponse à une demande dudit autre dispositif de commande à distance (6) comprenant ladite au moins une partie desdites données de reconfiguration transmettant son ID d'adresse à ledit autre dispositif de commande à distance (6).

8. Procédé selon la revendication 5, ledit au moins un dispositif esclave (2) en réponse au fait qu'au moins une autre partie desdites données de reconfiguration (RD) a été transmise à l'au moins un dispositif esclave par l'autre dispositif de commande à distance (6) transmettant sa clé de système (SK) audit autre dispositif de commande à distance (6).

9. Procédé selon la revendication 8, ladite au moins une autre partie desdites données de reconfiguration (RD) comprenant un code (PW).

10. Procédé selon l'une quelconque des revendications précédentes, au moins une transmission par ledit au moins un dispositif esclave (2) et/ou ledit autre dispositif de commande à distance (6) comprenant le cryptage des données transmises et/ou d'autres procédés de sécurisation de la (des) transmission(s).

11. Procédé selon la revendication 8, ladite clé de système (SK) transmise par ledit au moins un dispositif esclave (2) étant stockée par ledit autre dispositif de commande à distance (6) pour être utilisée en relation avec la commande subséquente dudit dispositif esclave.

12. Procédé selon l'une quelconque des revendications précédentes, ladite au moins une partie desdites données de reconfiguration (RD) transmises par ledit autre dispositif de commande à distance (6) étant reçue par une pluralité desdits dispositifs esclaves (2) et un groupe (A1, A2, A3, A4 - An) de ladite pluralité de dispositifs esclaves, qui ont stocké des données de reconfiguration (RD) correspondant aux données de reconfiguration (RD) reçues, étant reconfigurés pour pouvoir être commandés par ledit autre dispositif de commande à distance (6).

13. Procédé selon la revendication 12, ledit autre dispositif de commande à distance (6) dans une étape précédente ou subséquente ayant été apparié avec un autre groupe (B1, B2, B3 - Bm) comprenant une autre pluralité de dispositifs esclaves et moyennant quoi une fusion dudit groupe et dudit autre groupe de dispositifs esclaves étant effectuée afin que ladite pluralité de dispositifs esclaves compris dans lesdits groupes fusionnés puisse être commandée par ledit autre dispositif de commande à distance.

14. Procédé selon l'une quelconque des revendications précédentes, lesdites données de reconfiguration (RD) comprenant des premières et secondes données, lesdites premières données étant des données ouvertes (SID) destinée à être diffusées et lesdites secondes données étant des données d'authentification (PW), qui, lorsqu'elles sont transmises, sont cryptées.

15. Système comprenant au moins un dispositif esclave (2) et au moins un dispositif de commande à distance (4), ledit au moins un dispositif esclave (2) étant configuré pour pouvoir être commandé par ledit au moins un dispositif de commande à distance (4), ledit au moins un dispositif esclave ayant été configuré à une étape de configuration précédente, moyennant quoi ledit au moins un dispositif esclave (2) a été apparié avec ledit au moins un dispositif de commande à distance (4) pour pouvoir être commandé par ledit au moins un dispositif de commande à distance,
- ledit au moins un dispositif esclave étant conçu pour stocker des données de reconfiguration (RD),
- ledit système comprenant en outre un autre dispositif de commande à distance (6) qui est nouveau pour ledit au moins un dispositif esclave (2) et qui n'est pas apparié à celui-ci, ledit autre dispositif de commande à distance (6) étant conçu pour être fourni par un utilisateur avec au moins une partie des données de reconfiguration (RD) et conçu en outre pour diffuser sans fil au moins une partie des données de reconfiguration (RD) par un signal de commande sous la forme d'une demande de découverte aux dispositifs esclaves, et
- ledit au moins un dispositif esclave (2) étant configuré pour, après réception sans fil d'au moins une partie desdites données de reconfiguration (RD) et vérification de la correspondance avec les données de reconfiguration stockées, entrer dans un mode découverte et être autorisé à être reconfiguré pour pouvoir être commandé par l'autre dispositif de commande à distance (6) en fonction d'une autre communication sans fil avec l'autre dispositif de commande à distance (6).

16. Système selon la revendication 15, ledit au moins un dispositif esclave (2) étant conçu pour, en réponse à une demande dudit autre dispositif de commande à distance (6), ladite demande comprenant au moins une partie desdites données de reconfiguration (RD), transmettre son ID d'adresse audit autre dispositif de commande à distance (6) et/ou ledit au moins un dispositif esclave étant conçu pour, en réponse à une demande dudit autre dispositif de commande à distance (6) comprenant au moins une autre partie desdites données de reconfiguration (RD), transmettre sa clé de système (SK) audit autre dispositif de commande à distance.

17. Système selon la revendication 16, ladite reconfiguration dudit au moins un dispositif esclave (2) comprenant qu'une clé de système (SK) préalablement mémorisée par ledit au moins un dispositif esclave est transmise audit autre dispositif de commande à distance (6), et que ledit au moins un dispositif esclave (2) est apparié avec ledit autre dispositif de commande à distance 6) pour pouvoir être commandé par cet autre dispositif de commande à distance.
